Europäisches Patentamt

(19) European Patent Office

Office européen des brevets

(11) Numéro de publication: **0 197 811**
**B1**

(12) **FASCICULE DE BREVET EUROPEEN**

(45) Date de publication du fascicule du brevet: **20.06.90**

(51) Int. Cl.⁵: **B 60 M 1/34**

(21) Numéro de dépôt: **86400482.5**

(22) Date de dépôt: **07.03.86**

(54) **Dispositif de raccordement électrique pour élément de barre conductrice à joint de dilatation.**

(30) Priorité: **11.03.85 FR 8503526**

(43) Date de publication de la demande:
**15.10.86 Bulletin 86/42**

(45) Mention de la délivrance du brevet:
**20.06.90 Bulletin 90/25**

(84) Etats contractants désignés:
**BE CH FR GB IT LI LU NL**

(56) Documents cités:
**DE-A-2 807 122**
**FR-A-2 122 810**
**FR-A-2 238 802**
**GB-A-2 117 337**
**US-A-3 303 293**
**US-A-3 892 299**

(73) Titulaire: **Delachaux S.A.**
**119, Avenue Louis Roche**
**F-92231 Gennevilliers (FR)**

(72) Inventeur: **Dumontet, Max**
**8, rue du Pont de Pierre**
**F-93500 Pantin (FR)**
Inventeur: **Pelletier, Yves**
**24, Mail Alphonse Lamartine Jouy Les Moutiers**
**F-95000 Cergy (FR)**

(74) Mandataire: **Martin, Jean-Jacques et al**
**Cabinet REGIMBEAU 26, Avenue Kléber**
**F-75116 Paris (FR)**

Courier Press, Leamington Spa, England.

## Description

L'invention concerne les éléments de barre conductrice à joint de dilatation, notamment pour l'alimentation électrique des engins de manutention, et plus particulièrement le raccordement électrique qui assure la continuité électrique au niveau du joint de dilatation.

Le domaine préférentiel de l'invention est celui des rails de contact, suspendus ou au sol, pour l'alimentation des engins tels que grues, ponts roulants, transconteneurs, etc . . .

En général, de telles barres conductrices comportent des profilés rigides présentant pour un patin frotteur une piste conductrice de guidage et de frottement.

Il est nécessaire de prévoir des joints de dilatation pour assurer la continuité électrique (de captation) et mécanique (de guidage); ces joints de dilatation sont réalisés par les extrémités libres de deux profilés adjacents, ces extrémités étant en contact l'une avec l'autre de façon à assurer la continuité de la captation électrique quelle que soit leur position longitudinale relative. Pour cela, on peut entailler la barre conductrice au milieu de la piste pour avoir un chevauchement latéral de deux demi-profils, ou mieux encore prévoir que les extrémités libres des profilés adjacents présentent un système de plaquettes imbriquées comme deux peignes opposés: une plaquette d'une extrémité libre est alors en contact avec la ou les plaquettes adjacentes de l'autre extrémité libre dans une zone centrale du joint de dilatation.

Les problèmes posés par ces joints de dilatation sont d'ordre mécanique et électrique. Il s'agit en effet à la fois de préserver l'alignement des profilés, et d'assurer la continuité électrique entre lesdits profilés en plus de la continuité électrique de captation.

Pour le guidage mécanique, il est habituellement prévu, du côté des profilés rigides opposé à la piste conductrice, une ferrure assurant la liaison entre deux profilés adjacents de part et d'autre du joint de dilatation, de façon à autoriser un coulissement relatif longitudinal tout en préservant l'alignement desdits profilés. La présence de telles ferrures est un inconvénient, en particulier pour le temps de montage en usine.

Pour la continuité électrique entre les profilés, on utilise classiquement une tresse ou un câble souple de liaison. Ceci a l'avantage de la simplicité, mais, lorsque l'on envisage des intensités de courant importantes (par exemple 1 600 ampères), cela implique un dimensionnement considérable de la tresse ou du câble souple, incompatible avec une réalisation compacte. De plus, la disposition habituellement latérale de ces tresses ou câbles souples oblige à prendre des mesures supplémentaires de sécurité, en particulier pour un fonctionnement en extérieur sous intempéries.

Ainsi, US-A-3 892 299 décrit un dispositif de raccordement comportant, pour le guidage mécanique, un profilé central rigide et deux broches latérales de centrage formant un ensemble coulissant longitudinalement, et, pour la continuité électrique, un câble souple de liaison boulonné sur les profilés en regard. Outres les inconvénients déjà cités, la structure de ce dispositif ne peut empêcher la formation d'arcs électriques au niveau des organes de fixation en raison du jeu nécessaire au coulissement.

Il y a eu également des tentatives pour améliorer le raccordement au niveau des éclisses reliant duex éléments de profilés. Citons à ce titre US-A-3 303 293 dans lequel est décrite une broche encliquetable de dérivation; ces techniques ne sont cependant concevables que pour éclissage bout à bout, et de ce fait inapplicables au raccordement électrique au niveau d'un joint de dilatation.

Il convient également de mentionner GB-A-2 117 337, dans lequel est décrite une broche creuse de guidage visantà faciliter l'éclissage bout à bout de deux éléments de rail; cette broche creuse permet un assemblage rapide avec alignement des conducteurs homologues. Là encore, l'assemblage par éclissage est essentiellement fixe et ne comporte aucun joint de dilatation. Un tel montage permet tout au plus d'assurer une continuité de captation électrique, de sorte quil est nécessaire de prévoir un câble d'alimentation séparé pénétrant dans la broche creuse par une ouverture latérale associée.

Il a été enfin proposé de concevoir un dispositif de raccordement permettant d'assurer lacontinuité mécanique de la surface de contact pour patin frotteur au niveau d'un joint de dilatation grâce à une éclisse de jonction dont la surface supérieure est taillée en dièdre convexe comme les rails conducteurs adjacents.

C'est ainsi que FR-A-2 122 810 décrit un dispositif de raccordement électrique pour élément de barre conductrice à joint de dilatation, ledit élément de barre comportant des profilés rigides présentant pour un patin frotteur une piste conductrice de guidage et de frottement, et ledit joint de dilatation étant réalisé par les extrémités libres de deux profilés adjacents en contact l'une avec l'autre de façon à assurer une continuité de guidage et de captation électrique, conformément au préambule de la revendication 1.

Un tel système ne peut cependant assurer le transfert de courants de fortes intensités (par exemple 1 000 à 1 600 ampères) entre deux rails conducteurs adjacents, de sorte qu'il est nécessaire de lui adjoindre à cet effet des shunts extérieurs: de telles intensités n'ont en effet rien à voir avec celles des courants de captation, qui sont en général de l'ordre de 50 a 100 amperes.

Un but de l'invention est de proposer un dispositif de raccordement électrique plus fiable et plus performant que les dispositifs existants, et capable de supporter des intensités de courant élevées, quelle que soit la position longitudinale relative des profilés adjacents de part et d'autre du joint de dilatation.

Un autre but est de préserver l'alignement des profilés, afin en particulier d'éviter toute détérioration du joint de dilatation lorsque l'on utilise des plaquettes imbriquées dont les bords concernés par le passage du patin frotteur forment un prolongement des pistes conductrices tout au long dudit joint de dilatation.

Un autre but est de simplifier la conception des barres conductrices, pour en abaisser le temps de montage en usine, ceci permettant de réaliser des barres de grande longueur, prêtes à la pose, avec un coût de production raisonnable.

Il s'agit plus particulièrement d'un dispositif de raccordement électrique du type précité, caractérisé par le fait qu'il est essentiellement constitué par un système coulissant disposé longitudinalement à l'opposé de la piste conductrice, et comportant au moins une broche conductrice fixée sur l'un des profilés rigides et un connecteur embrochable associé fixé sur l'autre profilé rigide, ledit système coulissant assurant simultanément la continuité électrique entre lesdits profilés de part et d'autre du joint de dilatation en vue du transfert de courants de fortes intensités entre ces profilés, quelle que soit leur position longitudinale relative, et le guidage mécanique desdits profilés pour en préserver l'alignement.

De préférence, le système coulissant est disposé longitudinalement sur les profilés rigides, à l'opposé de la piste de guidage et de frottement, ce qui permet une réalisation très compacte, aisément protégeable par un capot.

Avantageusement, le système coulissant comporte au moins deux broches conductrices de section ronde, dont les extrémités libres sont reçues dans un connecteur cylindrique embrochable associé, et l'une au moins des extrémités libres présente en bout un organe de butée pour la position d'extension maximale du joint de dilatation.

Afin d'avoir un guidage mécanique performant qui préserve tout à fait le contact électrique, chaque connecteur embrochable présente en son alésage au moins une bague pour le guidage mécanique de l'extrémité de la broche associée, et au moins une bague ressort assurant le contact électrique.

De préférence, chaque broche conductrice présente une section diminuant en direction du connecteur embrochable associé, de façon que la section maximale de ladite broche corresponde sensiblement au diamètre extérieur dudit connecteur embrochable: ceci évite toute erreur de montage, et permet de mieux standardiser certaines pièces.

Avantageusement, le système coulissant est fixé sur chacun des profilés rigides par l'intermédiaire d'une éclisse associée, dont la longueur est choisie pour que la surface de contact de ladite éclisse contre le profilé rigide correspondant assure une dérivation suffisante du courant, quelle que soit la position longitudinale relative desdits profilés; la ou les broches conductrices sont fixées sur l'un des profilés rigides au moyen de mâchoires maintenues serrées contre l'éclisse associée par des organes de fixation traversant lesdites mâchoires et ladite éclisse, et les organes de fixation sont montés sur le profilé rigide associé de façon à interdire toute rotation relative.

En vue d'une utilisation avec des intensités de courant importantes, en particulier 1 000 à 1 600 ampères, il est avantageux que le système coulissant comporte deux rangées superposées de deux broches conductrices, lesdites broches étant fixées sur l'un des profilés rigides au moyen de mâchoires dont l'une centrale assure l'espacement entre les deux rangées superposées; pour un maintien optimal des broches conductrices, il est alors intéressant que les mâchoires soient maintenues serrées contre l'éclisse associée par des organes de fixation traversant lesdites mâchoires entre les broches conductrices de chaque rangée.

D'autres caractéristiques et avantages de l'invention apparaîtront plus clairement à la lumière de la description qui va suivre et des dessins annexés, concernant un mode particulier de réalisation, en référence aux figures, où:

- la figure 1 est une vue partielle en plan d'un élément de barre conductrice muni d'un dispositif de raccordement électrique conforme à l'invention, le joint de dilatation étant en position d'espacement minimal,

- la figure 2 est une coupe longitudinale de l'élément de barre conductrice de la figure 1, le joint de dilatation étant en position d'espacement maximal,

- la figure 3 est une coupe transversale selon III-III de la figure 2, illustrant la fixation des broches conductrices,

- la figure 4 est une coupe axiale d'un connecteur embrochable pouvant recevoir l'extrémité d'une broche conductrice,

- la figure 5 est une coupe transversale selon V-V de la figure 2, illustrant le coulissement et les moyens de butée des broches conductrices,

- la figure 6 est une coupe transversale partielle selon VI-VI de la figure 2 illustrant les plaquettes d'une extrémité de profilé, destinées à former un système imbriqué pour le joint de dilatation, avec les plaquettes de l'autre extrémité du profilé,

- la figure 7 est une coupe transversale partielle selon VII-VII de la figure 2, illustrant l'imbrication des plaques précédentes dans la zone centrale du joint de dilatation.

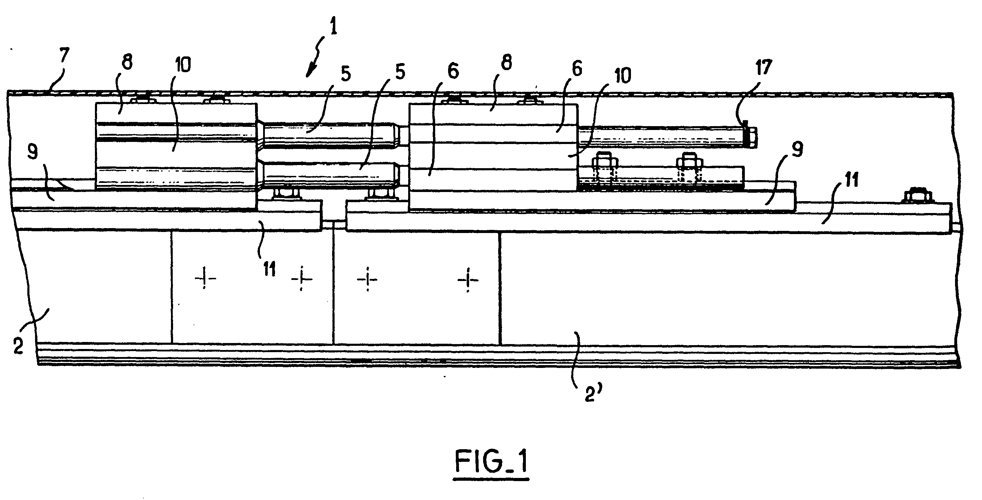

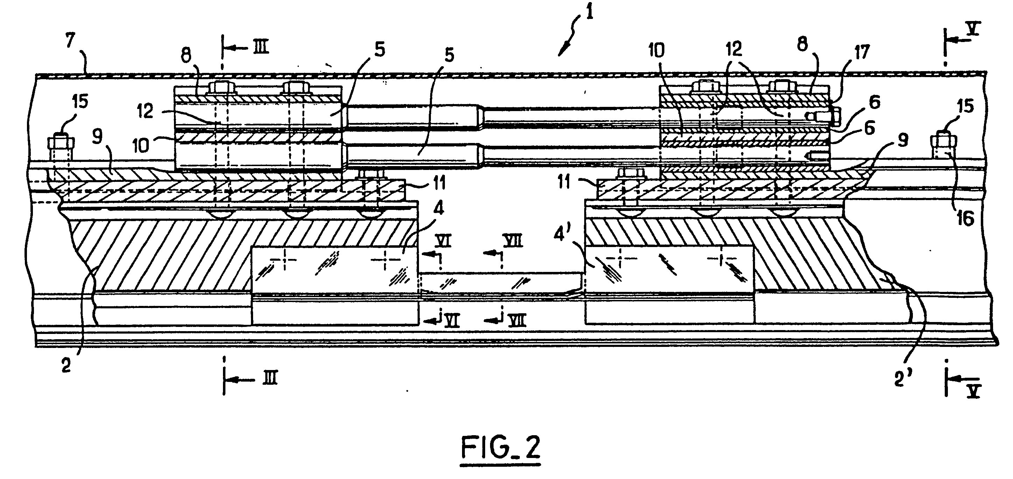

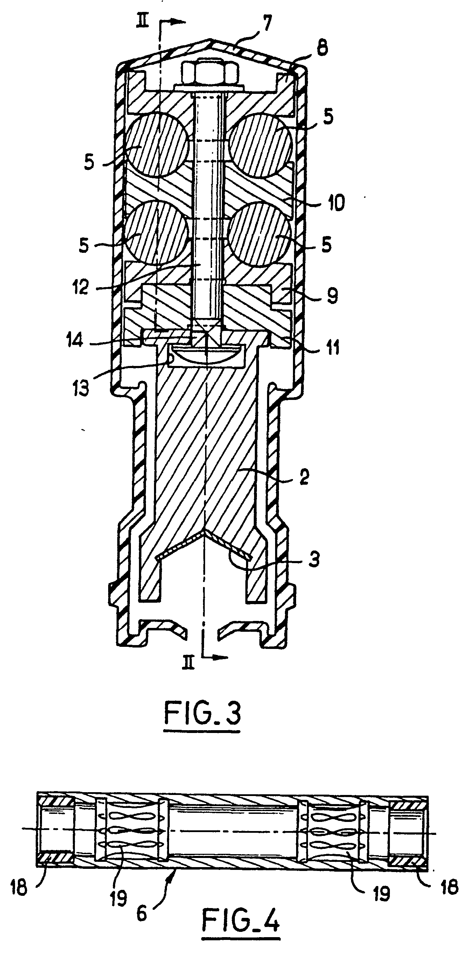

Les figures 1 et 2 illustrent un élément de barre conductrice 1 à joint de dilatation, du type de ceux servant à réaliser une ligne pour l'alimentation des engins de manutention (grues, ponts roulants, transconteneurs, etc...). L'élément de barre conductrice 1 comporte des profilés rigides 2, 2', par exemple en aluminium, présentant pour un patin frotteur (non représenté) une piste conductrice 3 de guidage et de frottement, ici réalisée selon une bande concave en V clipsée sur les profilés rigides (voir figure 3).

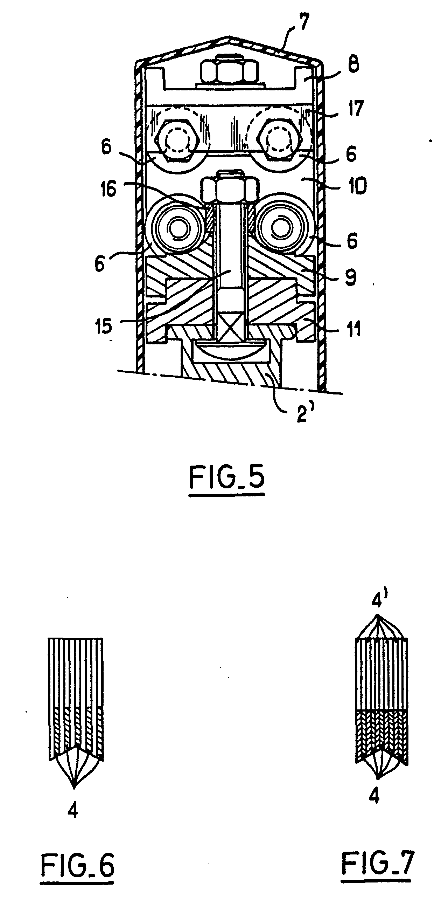

Le joint de dilatation entre deux profilés adjacents est défini par un système de plaquettes imbriquées 4, 4'. Chaque jeu de plaquettes est reçu avec ses cales d'espacement dans un logement ménagé à l'extrémité du profilé rigide correspondant, et fixé par boulonnage ou rivetage. Les figures 6 et 7 illustrent ce système de plaquettes imbriquées, et montrent en particulier le contour en V de leur bord concerné par le passage du patin frotteur, formant un prolongement direct des pistes conductrices 3 tout au long du joint de dilatation. Une telle réalisation est très intéressante, car il n'y a ainsi aucune discontinuité de guidage au passage du joint de dilatation, et la continuité électrique de captation est assurée avec une grande fiabilité.

En figure 1, aucune plaquette n'est visible, car le joint de dilatation est en position d'espacement minimal, alors qu'en figure 2 ledit joint est en position d'espacement maximal.

Afin d'éviter tout risque de détérioration de ce système, il est nécessaire de préserver l'alignement des profilés.

C'est là qu'intervient l'originalité de l'invention, selon laquelle il est prévu un dispositif de raccordement électrique essentiellement constitué par un système coulissant comportant au moins une broche conductrice 5 fixée sur l'un des profilés rigides 2, et un connecteur embrochable associé 6 fixé sur l'autre profilé rigide 2': selon un aspect fondamental de l'invention, ce système coulissant assure simultanément la continuité électrique entre les profilés de part et d'autre du joint de dilatation, et ce quelle que soit leur position longitudinale relative, et le guidage mécanique desdits profilés pour en préserver l'alignement.

Pour des applications impliquant des intensités de courant moyennes (jusqu'à 630 ampères par exemple), deux broches conductrices suffisent. On a illustré ici une variante à quatre broches conductrices de section ronde, tout à fait adaptée à une gamme d'intensités de 1 000 à 1 600 ampères.

Ainsi que cela ressort plus clairement des figures 3 et 5, le système coulissant est disposé longitudinalement (de préférence à une disposition latérale), à l'opposé de la piste de guidage et de frottement 3, et est organisé en deux rangées superposées, ce qui permet une réalisation très compacte, aisément protégeable par un capot 7.

Il va de soi qu'avec un grand nombre de broches conductrices, on évite le vrillage de l'élément de barre, et préserve ainsi le jeu des plaquettes du joint de dilatation. Avec une seule broche conductrice, il serait préférable d'adopter une section de barre polygonale, par exemple carrée, afin d'améliorer la résistance au vrillage.

La liaison des broches conductrices 5 au profilé rigide 2 est réalisée au moyen d'une mâchoire supérieure 8 et inférieure 9, avec ici (du fait de l'existence de deux rangées superposées) une mâchoire centrale d'espacement 10, ces mâchoires présentant longitudinalement un contour apte à recevoir les broches; ces détails apparaissent plus clairement sur la figure 3. L'ensemble vient en appui sur une éclisse 11 disposée contre le profilé rigide 2, et est maintenu en place par des boulons 12 dont la tête est logée dans une rainure 13 du profilé; chaque boulon présente de préférence un collet 14 de section carrée, formant organe anti-rotation avec le bord en regard du profilé. Les éléments 8 à 11 seront réalisés dans la même matière que les profilés rigides (aluminium par exemple), tandis que les broches conductrices seront avantageusement en cuivre.

Alors qu'une extrémité de chaque broche conductrice 5 est solidement fixée au profilé rigide 2, l'autre extrémité vient coulisser dans le connecteur embrochable 6 associé.

Ainsi que l'on peut le remarquer, les broches 5 présentent une section diminuant en direction du connecteur 6 associé, et de préférence, la section maximale de ladite broche correspond au diamètre extérieur dudit connecteur: ceci permet non seulement d'éviter des erreurs sur le sens de montage, mais autorise en plus une certaine standardisation des pièces.

En effet, figure 5, pour la liaison des connecteurs embrochables 6 au profilé rigide 2', on peut alors utiliser les mêmes mâchoires 8, 9, 10, et la même éclisse intermédiaire 11. Cette éclisse 11 est également boulonnée plus loin sur le profilé correspondant: les boulons 15 sont analogues aux boulons 12 à la longueur près (l'entretoise 16 permet de laisser passer les extrémités des broches dans la position fermée de la figure 1). Il est aussi prévu une plaque de butée 17, en forme de pont à deux arches, fixée en bout d'une rangée de broches conductrices: la position d'espacement maximal est ainsi limitée par une butée de la plaque 17 contre le bord en regard des mâchoires 8 et 10 (figure 2).

La figure 4 illustre un connecteur embrochable 6 dont la structure est avantageuse pour la présente application. Le connecteur présente en son alésage deux bagues d'extrémité 18 pour le guidage mécanique de l'extrémité de la broche associée, et au moins une bague ressort (19) assurant le contact électrique. Il est en effet intéressant de séparer les fonctions mécaniques et électriques, car de telles bagues 19, à lamelles de contact par exemple, assurent un bon contact électrique, mais ne permettent aucun guidage, lequel est assuré par les bagues 18, réalisées par exemple en polytétrafluoréthylène; de plus, ces bagues de guidage évitent toute détérioration des lamelles de contact que pourrait entraîner un mouvement desaxé de la broche coulissant dans le connecteur.

Il est à noter qu'en plus du comportement mécanique performant, le dispositif offre également un comportement électrique dont la fiabilité permet l'utilisation de courants dont l'intensité atteint 1 600 ampères. En effet, l'éclisse 11 est prévue avec une longueur choisie de telle façon que la surface de contact avec le profilé rigide assure le passage d'un courant suffisant de dérivation. On obtient ainsi une double dérivation électrique lorsque le patin frotteur passe au niveau du joint de dilatation, ce qui évite aux broches conductrices de supporter la totalité du courant. De plus, en cas de court-circuit, le dispositif permet de résister aux efforts électro-dynamiques importants, résultant de courants de très forte intensité (15 000 à 20 000 ampères par exemple).

L'invention n'est pas limitée aux modes de réalisation qui viennent d'être décrits, mais englobe toute variante reprenant, avec des moyens équivalents, les caractéristiques essentielles figurant aux revendications.

## Revendications

1. Dispositif de raccordement électrique pour élément de barre conductrice à joint de dilatation, ledité lément de barre comportant des profilés rigides (2, 2') présentant pour un patin frotteur une piste conductrice (3) de guidage et de frottement, et ledit joint de dilatation étant réalisé par les extrémités libres de deux profilés adjacents en contact l'une avec l'autre de façon à assurer une continuité de guidage et de captation électrique, caractérisé par le fait qu'il est essentiellement constitué par un système coulissant disposé longitudinalement à l'opposé de la piste conductrice (3), et comportant au moins une broche conductrice (5) fixée sur l'un des profilés rigides (2) et un connecteur embrochable (6) associé fixé sur l'autre profilé rigide (2'), ledit système coulissant assurant simultanément la continuité électrique entre lesdits profilés de part et d'autre du joint de dilatation en vue du transfert de courants de fortes intensités entre ces profilés, quelle que soit leur position longitudinale relative, et le guidage mécanique desdits profilés pour en préserver l'alignement.

2. Dispositif de raccordement électrique selon la revendication 1, caractérisé par le fait que le système coulissant est disposé longitudinalement sur les profilés rigides (2, 2'), à l'opposé de la piste (3) de guidage et de frottement.

3. Dispositif de raccordement électrique selon l'une des revendications 1 et 2, caractérisé par le fait que le système coulissant comporte au moins deux broches conductrices (5) de section ronde, dont les extrémités libres sont reçues dans un connecteur cylindrique embrochable associé (6).

4. Dispositif de raccordement électrique selon la revendication 3, caractérisé par le fait que l'une au moins des extrémités libres présente en bout un organe de butée (17) pour la position d'extension maximale du joint de dilatation.

5. Dispositif de raccordement électrique selon l'une des revendications 1 à 4, caractérisé par le fait que chaque connecteur embrochable (6) présente en son alésage au moins une bague (18) pour le guidage mécanique de l'extrémité de la broche associée, et au moins une bague ressort (19) assurant le contact électrique.

6. Dispositif de raccordement électrique selon l'une des revendications 3 à 5, caractérisé par le fait que chaque broche conductrice (5) présente une section diminuant en direction du connecteur embrochable (6) associé, de façon que la section maximale de ladite broche corresponde sensiblement au diamètre extérieur dudit connecteur embrochable.

7. Dispositif de raccordement électrique selon l'une des revendications 1 à 6, caractérisé par le fait que le système coulissant est fixé sur chacun des profilés rigides (2, 2') par l'intermédiaire d'une éclisse associée (11), dont la longueur est choisie pour que la surface de contact de ladite éclisse contre le profilé rigide correspondant assure une dérivation suffisante du courant, quelle que soit la position longitudinale relative desdits profilés.

8. Dispositif de raccordement électrique selon la revendication 7, caractérisé par le fait que la ou les broches conductrices (5) sont fixées sur l'un des profilés rigides au moyen de mâchoires (8 à 10) maintenues serrées contre l'éclisse (11) associée par des organes de fixation (12) traversant lesdites mâchoires et ladite éclisse.

9. Dispositif de raccordement électrique selon la revendication 8, caractérisé par le fait que les organes de fixation (12) sont montés sur le profilé rigide associé de façon à interdire toute rotation relative.

10. Dispositif de raccordement électrique selon les revendications 3 et 8, caractérisé par le fait que le système coulissant comporte deux rangées superposées de deux broches conductrices (5), lesdites broches étant fixées sur l'un des profilés rigides au moyen de mâchoires (8 à 10) dont l'une centrale (10) assure l'espacement entre les deux rangées superposées.

11. Dispositif de raccordement électrique selon la revendication 10, caractérisé par le fait que les mâchoires (8 à 10) sont maintenues serrées contre l'éclisse (11) associée par des organes de fixation (12) traversant lesdites mâchoires entre les broches conductrices (5) de chaque rangée.

## Patentansprüche

1. Elektrische Verbindungsvorrichtung für ein Leiterschienenelement mit Dehnungsverbindung, wobei das Schienenelement steife Profile (2, 2') enthält, die für einen Schleifschuh eine Führungs- und Schleifleitbahn (3) darstellen, und die Dehnungsverbindung verwirklicht ist durch die freien Enden zweier aneinander angrenzender Profile, die derart miteinander in Kontakt stehen, daß die Aufrechterhaltung der Führung und der elektrischen Aufnahmefähigkeit gewährleistet ist, dadurch gekennzeichnet, daß sie im wesentlichen aus einem verschiebbaren System besteht, das längsgerichtet auf der gegenüberliegenden Seite der Leitbahn (3) angeordnet ist, und wenigstens einen leitenden Stecker (5) aufweist, der auf einem der steifen Profile (2) befestigt ist, sowie ein steckbares Verbindungsstück (6), das entsprechend auf dem anderen steifen Profil (2') befestigt ist, wobei das verschiebbare System gleichzeitig die elektrische Kontinuität zwischen den Profilen auf beiden Seiten der Dehnungsverbindung in Bezug auf die Übertragung von Strom hoher Intensität zwischen den Profilen, unabhängig von ihrer relativen Stellung in Längsrichtung, als auch die mechanische Führung der Profile gewährleistet, um die Ausrichtung zu erhalten.

2. Elektrische Verbindungsvorrichtung nach Anspruch 1, dadurch gekennzeichnet, daß das verschiebbare System in Längsrichtung auf den steifen Profilen (2, 2') gegenüberliegend zur Führungs- und Schleifbahn (3) angeordnet ist.

3. Elektrische Verbindungsvorrichtung nach einem der Ansprüche 1 oder 2, dadurch gekennzeichnet, daß das verschiebbare System wenigstens zwei leitende Stecker (5) mit rundem Querschnitt aufweist, deren freie Enden in einem entsprechend zylindrischen steckbaren Verbindungsstück (6) aufgenommen sind.

4. Elektrische Verbindungsvorrichtung nach Anspruch 3, dadurch gekennzeichnet, daß wenigstens eines der freien Enden am Kopfende ein Anschlagorgan (17) für die Position der maximalen Ausdehnung der Dehnungsverbindung aufweist.

5. Elektrische Verbindungsvorrichtung nach einem der Ansprüche 1 bis 4, dadurch gekennzeichnet, daß jedes steckbare Verbindungsstück (6) in seiner Bohrung wenigstens eine Buchse (18) für die mechanische Führung des Endes des entsprechenden Steckers aufweist, sowie wenigstens eine Federhülse (19), um den elektrischen Kontakt zu sichern.

6. Elektrische Verbindungsvorrichtung nach einem der Ansprüche 3 bis 5, dadurch gekennzeichnet, daß jeder leitende Stecker (5) einen sich in Richtung des entsprechenden steckbaren Verbindungsstücks (6) verringernden Querschnitt aufweist, derart, daß der maximale Querschnitt des Steckers genau mit dem Außendurchmesser des steckbaren Verbindungsstücks übereinstimmt.

7. Elektrische Verbindungsvorrichtung nach einem der Ansprüche 1 bis 6, dadurch gekennzeichnet, daß das verschiebbare System auf jedem der steifen Profile (2, 2') über eine dazwischenliegende, zugeordnete Schiene (11) befestigt ist, deren Länge so gewählt ist, daß die Kontaktfläche dieser Schiene am korrespondierenden steifen Profil unabhängig von der relativen Lage der Profile in Längsrichtung eine ausreichende Stromabzweigung gewährleistet.

8. Elektrische Verbindungsvorrichtung nach Anspruch 7, dadurch gekennzeichnet, daß der oder die Leitstecker (5) an einem der steifen Profile mit Hilfe von Klemmitteln (8 bis 10) befestigt sind, die gegen die entsprechende Schiene (11) durch Befestigungsorgane angedrückt gehalten sind, die die Klemmen und die Schiene durchdringen.

9. Elektrische Verbindungsvorrichtung nach Anspruch 8, dadurch gekennzeichnet, daß die Befestigungsorgane (12) an dem entsprechenden steifen Profil derart angeordnet sind, daß jegliche Relativdrehung unterbunden wird.

10. Elektrische Verbindungsvorrichtung nach den Ansprüchen 3 und 8, dadurch gekennzeichnet, daß das verschiebbare System zwei übereinander angeordnete Reihen mit zwei Leitsteckern (5) aufweist, wobei die Stecker auf einem der steifen Profile mit Klemmitteln (8 bis 10) befestigt sind, von denen das mittlere (10) den Abstand zwischen den zwei übereinander angeordneten Reihen sichert.

11. Elektrische Verbindungsvorrichtung nach Anspruch 10, dadurch gekennzeichnet, daß die Klemmen (8 bis 10) gegen die entsprechende Schiene (11) durch Befestigungsorgane (12) angedrückt gehalten sind, die die Klemmen zwischen den Leitsteckern (5) jeder Reihe durchdringen.

## Claims

1. An electrical connection device for a conductive busbar component including an expansion joint, said busbar component comprising rigid bars (2, 2') presenting a pickup shoe with a conductive track (3) for mechanical guidance and electrical pickup, said expansion joint being constituted by the free ends of two adjacent bars coming into contact with each other in such a manner as to ensure continuity in guidance and in electrical pickup, characterized in that it is essentially constituted by a sliding system disposed longitudinally opposite to the conductive track (3), and comprising at least one conductive pin (5) fixed on one (2) of said rigid bars and at least one associated pluggable connector (6) fixed on the other one (2') of said rigid bars, said sliding system simultaneously providing electrical continuity between said bars on either side of said expansion joint for transferring high currents between these rigid bars regardless of their relative longitudinal position, and mechanical guidance of said bars to keep them in alignment.

2. An electrical connection device according to claim 1, characterized in that said sliding system is disposed longitudinally on said rigid bars (2, 2') on the opposite side thereof to said guidance and pickup track (3).

3. An electrical connection device according to claim 1 or 2, characterized in that said sliding system comprises at least two conductive pins (5) of round cross-section, with the free ends thereof being received in respective associated cylindrical pluggable connectors (6).

4. An electrical connection device according to claim 3, characterized in that at least one of the free ends has an abutment member (17) disposed at the tip thereof for limiting the maximum extension position of the expansion joint.

5. An electrical connection device according to anyone of claims 1 to 4, characterized in that each pluggable connector (6) includes a bore with at least one ring (18) for mechanically guiding the end of the associated pin, and at least one spring ring (19) for providing electrical contact therewith.

6. An electrical connection device according to anyone of claims 3 to 5, characterized in that each conductive pin (5) has a smaller cross-section at its end for engaging the associated pluggable connector (6) than at its other end, thereby enabling the maximum cross-section of said pin to be substantially the same as the outside diameter of the corresponding pluggable connector.

7. An electrical connection device according to anyone of claims 1 to 6, characterized in that said sliding system is fixed to each of said rigid bars (2, 2') by means of an associated fishplate (11), with the length of said fishplates being chosen so that the area of contact between each fishplate and the corresponding rigid bar passes sufficient current regardless of the relative longitudinal position of said bars.

8. An electrical connection device according to claim 7, characterized in that the conductive pin(s) (5) is (are) fixed to one of said rigid bars by means of jaws (8 to 10) which are clamped against the associated fishplate (11) by fastening members (12) passing through said jaws and said fishplate.

9. An electrical connection device according to claim 8, characterized in that the fastening members (12) are mounted on the associated rigid bar in such a manner as to prevent them from rotating relative thereto.

10. An electrical connection device according to claims 3 and 8, characterized in that said sliding system comprises two adjacent rows of conductive pins (5), said pins being fixed to one of said rigid bars by means of jaws (8 to 10) including a central jaw (10) providing spacing between said adjacent rows.

11. An electrical connection device according to claim 10, characterized in that said jaws (8 to 10) are clamped against the associated fishplate (11) by fastening members (12) passing through said jaws between the conductive pins (5) of each row.

FIG_1

FIG_2

FIG.3

FIG.4

3

FIG.5

FIG.6

FIG.7